# EUROPÄISCHE PATENTSCHRIFT

(11) **EP 2 578 374 B1**
(45) Veröffentlichungstag und Bekanntmachung des Hinweises auf die Patenterteilung: **22.04.2015**
(21) Anmeldenummer: 12186438.3
(22) Anmeldetag: 27.09.2012
(51) Int. Cl.: B29C 45/40

(54) **Spritzgußteil-Auswerfvorrichtung und Kunststoff-Spritzgießmaschine mit einer solchen Spritzgußteil-Auswerfvorrichtung**
Injection moulded part ejector and injection moulding machine with such an injection moulded part ejector
Dispositif d'éjection d'une pièce moulée par injection et machine de moulage par injection de plastique avec un tel dispositif d'éjection d'une pièce moulée par injection

(30) Priorität: 06.10.2011 DE 102011114963
(43) Veröffentlichungstag der Anmeldung: 10.04.2013
(73) Patentinhaber: KraussMaffei Technologies GmbH, 80997 München (DE)
(72) Erfinder: Fiederle, Ralf, 80637 München (DE)
(74) Vertreter: Wilhelm, Ludwig

(56) Entgegenhaltungen:
- EP-A2- 0 083 788
- DE-A1- 4 444 395
- DE-A1-102005 059 130

## Beschreibung

Die Erfindung betrifft eine Spritzgußteil-Auswerfvorrichtung, aufweisend einen Grundträger, ein mit dem Grundträger verbundenes Befestigungsmittel, das zur festen Verbindung des Grundträgers mit einer Formaufspannplatte einer Spritzgießmaschine ausgebildet ist, wenigstens eine mit dem Grundträger verbundene Axialführung, eine an der wenigstens einen Axialführung verschieblich gelagerte Auswerferplatte, einen die Auswerferplatte antreibenden Stelltrieb, sowie wenigstens eine an die Auswerferplatte gekoppelte Auswerferstange. Die Erfindung betrifft außerdem eine Kunststoff-Spritzgießmaschine mit einer solchen Spritzgußteil-Auswerfvorrichtung.

Die DE 10 2010 035 389 A1 beschreibt eine Auswerfervorrichtung für eine Spritzgießmaschine, mit an einer bewegbaren Auswerferplatte angebrachten, durch einen Antriebsmotor antreibbaren Auswerferstiften zum Auswerfen von Spritzgussteilen aus einer Kavität eines Spritzgießwerkzeugs. Die Auswerfervorrichtung umfasst einen Antriebsmotor, welcher über eine Spindel die Auswerferplatte translatorisch antreibt. An der Auswerferplatte sind die eine bewegbare Formaufspannplatte durchsetzenden Auswerferstifte angeordnet, welche an ihrem vorderen Ende Auswerferstiftfortsätze aufweisen, die direkt am Spritzgussteil angreifen und bei translatorischer Bewegung dieses Spritzgussteils über den Gewindekern einer Werkzeughälfte abstreifen können. Die Auswerferplatte ist an einer Auswerferplattenführung verdrehsicher geführt. Die Werkzeughälfte weist die Negativform des Innengewindes für eine herzustellende Schraubkappe in Form eines Außengewindes auf.

Die DE 10 2006 002 819 A1 beschreibt eine Antriebsvorrichtung für Gewindekerne von Spritzgießwerkzeugen zum Herstellen von mit einem Innengewinde versehenen Spritzlingen in Spritzgießformen mit einem Gewindekernhalter mit Leitgewinde, dessen Steigung mit der Gewindesteigung im Spritzling übereinstimmt, wobei zur Bestimmung des Beginnes und des Endes jeder Schraubbewegung je ein Endschalter angeordnet ist. Der Gewindekernhalter ist mit dem Leitgewinde in einer Gewindekernmutter schraubbar angeordnet, die zwischen einer Getriebeplatte und einer Grundplatte mittels Schrauben geklemmt befestigt ist. Der Gewindekernhalter ist mit einer Spindel versehen, die mindestens eine Mitnahmefläche besitzt, mit der die Spindel in einer Mitnahme eines Mitnehmerrades geführt angeordnet ist, das in der Getriebeplatte radial gelagert ist. Ein Motor ist mit der Getriebeplatte fest verbunden, dessen Ritzel mit dem Mitnehmerrad in Wirkverbindung steht.

Die EP 0 083 788 A2 beschreibt einen Zweistufenauswerfer für Spritzguss- oder Druckgussformen mit zwei gegeneinander verfahrbaren und einen Formhohlraum einschließenden Formplatten und mit zwei Auswerferplatten, die je mit Auswerferstiften und Profilauswerfern versehen und getrennt voneinander verschiebbar sind. Der Zweistufenauswerfer weist einen Anschlag auf, dem eine Aussparung in einer der Auswerferplatten gegenüberliegt, so dass beim Verschieben der beiden Auswerferplatten durch den Zweistufenauswerfer lediglich die eine Auswerferplatte zur Anlage an dem Anschlag kommt.

Aufgabe der Erfindung ist es, eine verbesserte Spritzgußteil-Auswerfvorrichtung anzugeben, bei der insbesondere eine Freiziehdistanz einfacher einzustellen ist.

Unter Freiziehdistanz kann ein Leerhubweg der verschieblich gelagerten Auswerferplatte verstanden werden, bei dessen Leerhub die an die Auswerferplatte gekoppelte wenigstens eine Auswerferstange nicht mit der Auswerferplatte mitbewegt wird.

Die Aufgabe wird gelöst durch eine Spritzgußteil-Auswerfvorrichtung, aufweisend einen Grundträger, ein mit dem Grundträger verbundenes Befestigungsmittel, das zur festen Verbindung des Grundträgers mit einer Formaufspannplatte einer Spritzgießmaschine ausgebildet ist, wenigstens eine mit dem Grundträger verbundene Axialführung, eine an der wenigstens einen Axialführung verschieblich gelagerte Auswerferplatte, einen die Auswerferplatte antreibenden Stelltrieb, sowie wenigstens eine an die Auswerferplatte gekoppelte Auswerferstange, des Weiteren aufweisend eine die Auswerferplatte an die Auswerferstange koppelnde Adaptervorrichtung, die eine Freizieh-Einrichtung aufweist, die ausgebildet ist, eine Bewegung der Auswerferplatte auf die wenigstens eine Auswerferstange unter Bildung eines einstellbaren Freiziehbereiches zu übertragen, wobei die Adaptervorrichtung eine Adapterplatte aufweist, die eine vordere Stirnseite aufweist, an der die wenigstens eine Auswerferstange befestigt ist, und eine der vorderen Stirnseite gegenüberliegende rückseitige Stirnseite aufweist, an der eine Adapterbuchse angeordnet ist, die zur Bildung der Freizieh-Einrichtung in einer Aufnahme der Auswerferplatte axial verschieblich geführt ist und die an einer der Adapterplatte gegenüberliegenden Seite der Auswerferplatte einen auf der Adapterbuchse verstellbar und arretierbar gelagerten, den Freiziehbereich festlegenden Anschlagkörper aufweist.

Der Grundträger kann von einem Lagerschild gebildet werden, an dem wenigstens ein Stelltrieb zum Antreiben, d.h. axialen Bewegen der Auswerferplatte befestigt ist. Erfindungsgemäß ist die Auswerferstange bzw. sind die mehreren Auswerferstangen nicht unmittelbar an der Auswerferplatte befestigt, sondern die wenigstens eine Auswerferstange ist an einem separaten Grundkörper, der eine Adapterplatte sein kann, befestigt. Erfindungsgemäß ist die wenigstens eine Auswerferstange bzw. der Grundkörper oder die Adapterplatte über ein einstellbares Axialspiel an die Auswerferplatte gekoppelt. Um ein einstellbares Axialspiel zu ermöglichen, ist erfindungsgemäß eine Adaptervorrichtung vorgesehen, die eine Freizieh-Einrichtung aufweist. Die FreiziehEinrichtung ist dabei ausgebildet, eine Bewegung der Auswerferplatte auf die wenigstens eine Auswerferstange unter Bildung eines einstellbaren Freiziehbereiches zu übertragen.

Der Grundträger kann mittels eines separaten Befestigungsmittels mit einer Formaufspannplatte, insbesondere einer Rückseite der Formaufspannplatte einer Spritzgießmaschine verbunden sein. In einer funktionsvereinigenden Ausführung kann das Befestigungsmittel, welches den Grundträger mit der Formaufspannplatte verbinden, durch die wenigstens eine Axialführung gebildet werden, an der die Auswerferplatte verschieblich gelagert ist.

Die Adaptervorrichtung weist eine Adapterplatte auf, die eine vordere Stirnseite aufweist, an der die wenigstens eine Auswerferstange befestigt ist, und eine der vorderen Stirnseite gegenüberliegende rückseitige Stirnseite aufweist, an der eine Adapterbuchse angeordnet ist, die zur Bildung der Freizieh-Einrichtung in einer Aufnahme der Auswerferplatte axial verschieblich geführt ist und die an einer der Adapterplatte gegenüberliegenden Seite der Auswerferplatte einen auf der Adapterbuchse verstellbar und arretierbar gelagerten, den Freiziehbereich festlegenden Anschlagkörper aufweist.

Indem die Adapterbuchse der Adaptervorrichtung axial verschieblich in der Aufnahme bzw. in einem Durchlass der Auswerferplatte geführt ist, ergibt sich ein Freiziehweg, d.h. ein Leerhubweg zwischen der Adapterplatte und einem erfindungsgemäßen Anschlagkörper.Die Größe bzw. die axiale Länge des Freiziehweges, d.h. des Leerhubweges ergibt sich dabei aus dem Abstand der Adapterplatte von dem Anschlagkörper auf der Adapterbuchse. Die erfindungsgemäße Freizieh-Einrichtung kann insoweit im Wesentlichen durch die in der Aufnahme bzw. dem Durchlass der Auswerferplatte geführte Adapterbuchse, durch die Adapterplatte und den Anschlagkörper gebildet werden.

Die Freizieh-Einrichtung kann ausgebildet sein, eine Bewegung der Auswerferplatte auf die Adapterplatte unter Bildung eines manuell einstellbaren Freiziehbereiches zu übertragen. Zur Bildung eines einstellbaren Freiziehbereiches, d.h. zur Veränderung des Freiziehweges, d.h. des Leerhubweges kann erfindungsgemäß insoweit der Anschlagkörper axial verstellbar auf der Adapterbuchse gelagert und/oder befestigt sein. Der Anschlagkörper kann auf der Adapterbuchse manuell einstellbar sein. Der Anschlagkörper kann insbesondere auf der Adapterbuchse manuell in seiner axialen Position auf der Adapterbuchse verstellt und in einer gewünschten axialen Position auf der Adapterbuchse arretiert werden.

Der Anschlagkörper kann durch einen auf der Adapterbuchse axial verschieblich gelagerten Klemmring gebildet werden, der ein Spannmittel aufweist, durch das der Klemmring auf der Adapterbuchse kraftschlüssig zumindest axial arretierbar ist. Der Klemmring kann ein Spannmittel aufweisen, durch das der Klemmring auf der Adapterbuchse kraftschlüssig zumindest axial, insbesondere axial und radial arretiert sein kann. Die Adapterbuchse kann dabei ein Außengewinde aufweisen, auf dem der Klemmring mit seinem Innengewinde aufsitzt. Der Klemmring kann einen radialen Schlitz aufweisen. Der Schlitz kann beispielsweise durch eine Stellschraube in seiner Schlitzweite verstellt werden. Insbesondere kann die Stellschraube beispielsweise zwei Laschen des Klemmrings zusammenführen, so dass die Schlitzweite verkleinert wird und dadurch der Klemmring auf der Adapterbuchse festgeklemmt werden kann. Zum Lösen des Klemmrings können die zwei Laschen des Klemmrings dann durch die Stellschraube auseinander bewegt werden, so dass die Schlitzweite vergrößert wird und dadurch der Klemmring auf der Adapterbuchse aufgrund seines sich erweiternden Innendurchmessers auf der Adapterbuchse beweglich wird. Die Adapterbuchse kann aufgrund des Außengewindes der Adapterbuchse und des korrespondierenden Innengewindes des Klemmrings durch Drehen des Klemmrings in seiner axialen Position auf der Adapterbuchse verstellt werden.

Alternativ können die Mantelwand der Adapterbuchse und die Innenwand des Klemmrings jeweils glatt ausgebildet sein, so dass der Klemmring in seinem ungeklemmten Zustand auf der Adapterbuchse gleitend axial verschoben werden kann.

An dem Grundträger kann ein Motor angeordnet sein, der eine Motorwelle aufweist, die mit einer Adapterwelle verbunden ist, die ein Kupplungsmittel zum Verbinden der Adapterwelle mit einer Werkzeugeingangswelle eines bewegliche Schieber und/oder Gießkerne, insbesondere Gewindekerne aufweisenden Spritzgießwerkzeugs aufweist. Die Adapterwelle kann sich von der Motorwelle ausgehend bis an die Spritzgießformhälfte erstrecken. Dazu kann beispielsweise die bewegliche Formaufspannplatte eine Zentralöffnung aufweisen. Die Spritzgießformhälfte weist demgemäß eine Werkzeugeingangswelle auf. Die Werkzeugeingangswelle kann insbesondere dazu eingerichtet sein, einen oder mehrere bewegliche Schieber und/oder Gießkerne, insbesondere Gewindekerne des Spritzgießwerkzeugs, d.h. der Spritzgießformhälfte anzutreiben. Ein Kupplungsmittel, das eine Welle-Welle-Verbindung darstellen kann und insbesondere als Kupplungsbuchse ausgebildet sein kann, kann dabei die Adapterwelle mit der Werkzeugeingangswelle drehfest verbinden. Das Kupplungsmittel kann die Adapterwelle mit der Werkzeugeingangswelle axial verschieblich verbinden. Die Adapterwelle kann somit auf einfache Weise aus der Spritzgußteil-Auswerfvorrichtung herausgenommen und/oder eingefügt werden. So ist ein einfacher Austausch, beispielsweise unterschiedlich langer Adapterwellen möglich, um beispielsweise die Spritzgußteil-Auswerfvorrichtung an unterschiedliche Spritzgießwerkzeuge, d.h. Spritzgießformhälften anpassen zu können. Im Zuge einer baulichen Veränderung des Spritzgießwerkzeugs bzw. der Spritzgießformhälften und/oder der Kunststoff-Spritzgießmaschine kann die gewünschte und/oder benötigte Freiziehdistanz auf einfache Weise eingestellt bzw. verändert und/oder angepasst werden. Unter Freiziehdistanz kann dabei ein Leerhubweg der verschieblich gelagerten Auswerferplatte verstanden werden, bei dessen Leerhub die an die Auswerferplatte gekoppelte wenigstens eine Auswerferstange noch nicht mit der Auswerferplatte mitbewegt wird.

Die Auswerferplatte kann eine Aufnahme aufweisen, durch die sich die Adapterwelle erstreckt, wobei die Adapterbuchse axial verschieblich in der Aufnahme geführt ist und die Adapterwelle durch die Adapterbuchse drehbar hindurchgeführt ist.

In allen erfindungsgemäßen Ausführungsformen kann der die Auswerferplatte antreibende Stelltrieb, insbesondere ein hydraulisch oder pneumatisch betätigter Stelltrieb an dem Grundträger angeordnet, insbesondere an dem Grundträger befestigt sein.

Eine erfindungsgemäße Kunststoff-Spritzgießmaschine weist eine Spritzgußteil-Auswerfvorrichtung wie erfindungsgemäß beschrieben auf.

Die Kunststoff-Spritzgießmaschine kann eine Steuervorrichtung aufweisen, die eingerichtet ist, den Stellantrieb und den Motor aufeinander abgestimmt, insbesondere synchronisiert anzutreiben. Insbesondere zur Sicherstellung einer gewünschten aufeinander abgestimmten Bewegung von Formaufspannplatten, bzw. der Spritzgießformhälften, der Auswerferplatte bzw. der Auswerferstangen und der Motorwelle zum Bewegen von Schiebern und/oder Gießkernen, insbesondere Gewindekernen des Spritzgießwerkzeugs, d.h. der Spritzgießformhälften, kann die erfindungsgemäße Adaptervorrichtung und die erfindungsgemäße Freizieh-Einrichtung eine einfache und genaue Einstellung des Freiziehbereiches ermöglichen.

Die Kunststoff-Spritzgießmaschine kann eine Formaufspannplatte mit einer Zentralöffnung aufweisen, durch welche die wenigstens eine Auswerferstange und die Adapterwelle hindurch an eine an der Formaufspannplatte befestigte Spitzgießformhälfte herangeführt sind. Beispielsweise können an einer insbesondere mittig angeordneten Adapterplatte verschieden ausgebildete und/oder angeordnete Auswerferstangen in unterschiedlicher Anzahl befestigt werden, wobei keine Änderungen an der Formaufspannplatte notwendig sind, da die Auswerferstangen ungehindert durch die Zentralöffnung der Formaufspannplatte hindurchgeführt werden können, ohne dass gesonderte oder spezielle Bohrungen in der Formaufspannplatte angebracht werden müssten.

Ein Ausführungsbeispiel der Erfindung ist exemplarisch in den beigefügten schematischen Figuren dargestellt. Es zeigen:
- Fig. 1: eine Seitenansicht einer Spritzgießmaschine mit einer erfindungsgemäßen Spritzgußteil-Auswerfvorrichtung;
- Fig. 2: eine Seitenansicht auf eine Ausführungsform einer Spritzgußteil-Auswerfvorrichtung;
- Fig. 3: eine Querschnittsansicht der Spritzgußteil-Auswerfvorrichtung gemäß Fig. 2;
- Fig. 4: eine perspektivische Schnittdarstellung der Spritzgußteil-Auswerfvorrichtung gemäß Fig. 2 und Fig. 3;
- Fig. 5: eine perspektivische Darstellung einer erfindungsgemäßen Adaptervorrichtung mit einer Freizieh-Einrichtung in Alleinstellung.

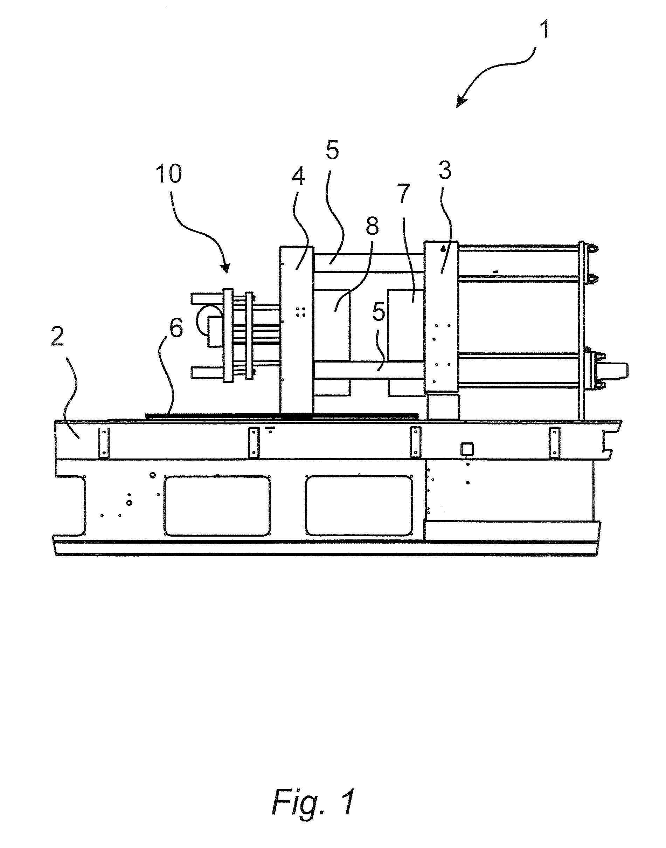

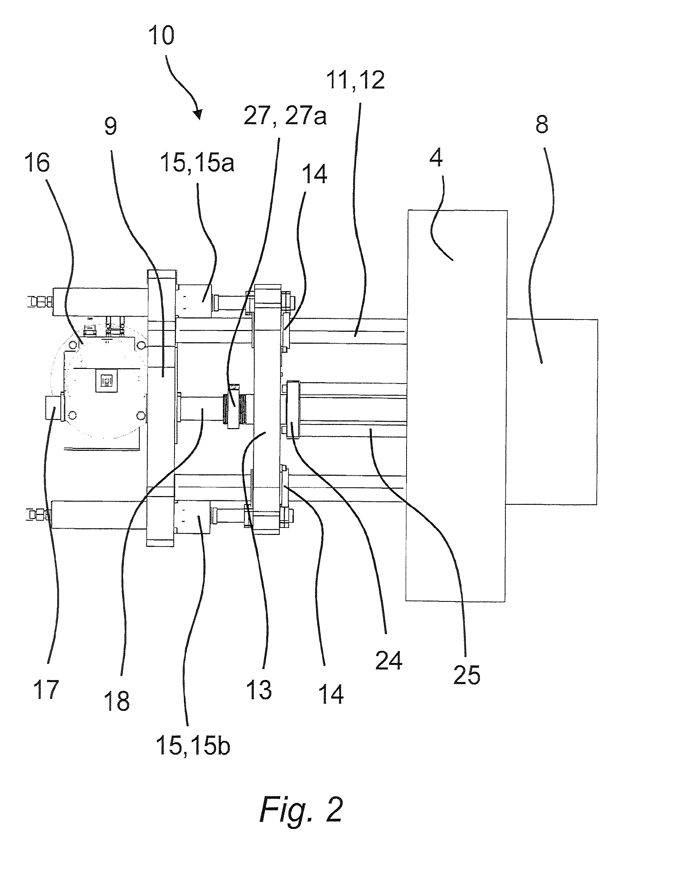

In der Figur 1 ist eine beispielhafte Spritzgießmaschine 1 dargestellt. Die Spritzgießmaschine 1 weist ein Maschinenbett 2 auf. Auf dem Maschinenbett 2 ist eine feststehende Formaufspannplatte 3 befestigt und eine bewegliche Formaufspannplatte 4 linear verschieblich gelagert. Zur ihrer linear verschieblichen Lagerung ist die bewegliche Formaufspannplatte 4 entlang von vier Horizontalsäulen 5 verschiebbar gelagert. Die bewegliche Formaufspannplatte 4 kann beispielsweise durch nicht näher dargestellte hydraulische Antriebe entlang der Längserstreckung der vier Horizontalsäulen 5 bewegt werden. Die bewegliche Formaufspannplatte 4 ist durch Linearführungen 6 horizontal beweglich auf dem Maschinenbett 2 gelagert. An der feststehenden Formaufspannplatte 3 ist eine erste Spritzgießformhälfte 7 befestigt. An der beweglichen Formaufspannplatte 3 ist eine zweite Spritzgießformhälfte 8 befestigt. An einer der zweiten Spritzgießformhälfte 8 gegenüberliegenden Seite der beweglichen Formaufspannplatte 4 ist im gezeigten Ausführungsbeispiels eine erfindungsgemäße Spritzgußteil-Auswerfvorrichtung 10 angeordnet. Alternativ oder ergänzend kann eine erfindungsgemäße Spritzgußteil-Auswerfvorrichtung 10 jedoch gegebenenfalls auch an der feststehenden Formaufspannplatte 3 angeordnet sein. Die Spritzgußteil-Auswerfvorrichtung 10 ist in der Fig. 2 näher gezeigt.

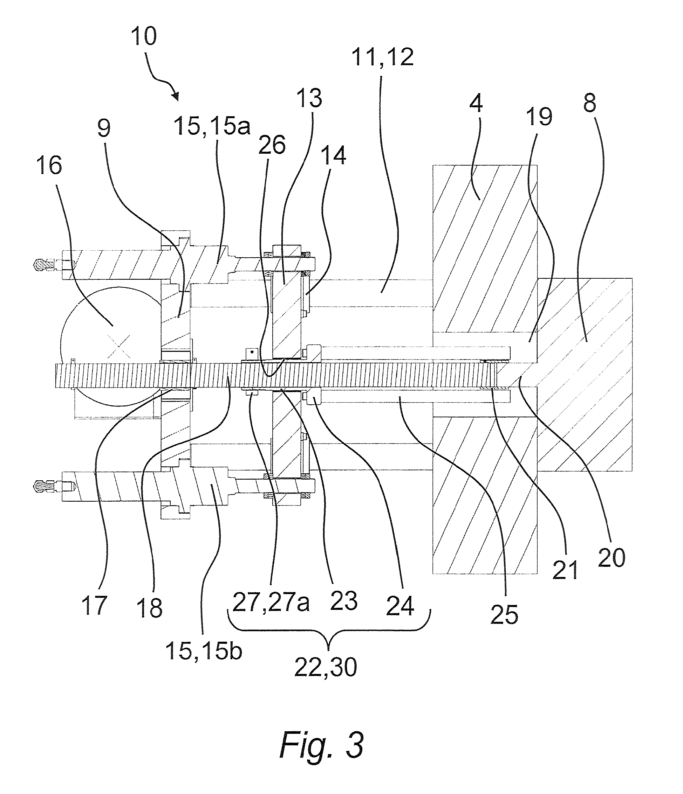

Die in Fig. 2 dargestellte Spritzgußteil-Auswerfvorrichtung 10 weist einen Grundträger 9 auf. Der Grundträger 9 ist über Befestigungsmittel 11 mit der beweglichen Formaufspannplatte 4 verbunden. Im gezeigten Ausführungsbeispiel wir das Befestigungsmittel 11 durch Axialführungen 12 gebildet. Die Axialführungen 12 können, wie dargestellt, von stangenartigen oder rohrartigen Holmen gebildet werden, deren im Querschnitt insbesondere kreisförmige Mantelwand eine Gleitfläche bildet. An den Axialführungen 12 ist eine Auswerferplatte 13 entlang der Längserstreckung der Axialführungen 12, d.h. axial verschieblich gelagert. Dazu kann die Auswerferplatte 13 Gleitbuchsen 14 aufweisen, welche auf jeweils einer Axialführungen 12, d.h. auf jeweils einem Holm der Axialführungen 12 verschieblich gelagert sind. Um die Auswerferplatte 13 entlang der Axialführungen 12 automatisch bewegen zu können, ist die Auswerferplatte 13 mit wenigstens einem, insbesondere zwei Stelltrieben 15 verbunden, die im dargestellten Ausführungsbeispiel von zwei Hydraulikzylindern 15a, 15b gebildet werden. Die Gehäuse der Hydraulikzylinder 15a, 15b sind fest mit dem Grundträger 9 verbunden. An einer der beweglichen Formaufspannplatte 4 gegenüberliegenden Seite des Grundträgers 9 ist ein Motor 16 angeflanscht. Der Motor 16 weist eine Motorwelle 17 auf. Die Motorwelle 17 kann, wie im dargestellten Ausführungsbeispiel als Hohlwelle ausgeführt sein. Die Motorwelle 17, insbesondere die Hohlwelle kann ein Welle-Nabe-Verbindungsprofil aufweisen. Die Motorwelle 17 kann drehfest mit einer Adapterwelle 18 verbunden sein, oder, wie dargestellt, nur aus einer Welle bestehen. Die Adapterwelle 18 reicht durch die Spritzgußteil-Auswerfvorrichtung 10 hindurch bis an die zweite Spritzgießformhälfte 8 heran. Dies ist in der Schnittdarstellung der Fig. 3 näher gezeigt.

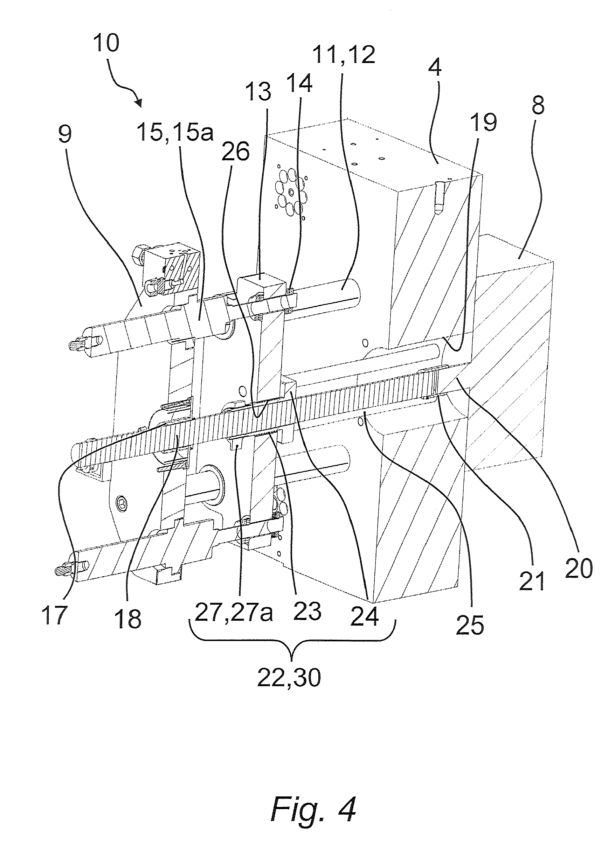

In der Fig. 3 und in der Fig. 4 ist dargestellt, wie die Adapterwelle 18 von der Motorwelle 17 ausgehend sich bis an die zweite Spritzgießformhälfte 8 erstreckt. Dazu weist die bewegliche Formaufspannplatte 4 im dargestellten Ausführungsbeispiel eine Zentralöffnung 19 auf. Statt einer Zentralöffnung 19 können in abgewandelten Ausführungen auch jegliche andere Auswerferbohrbilder, beispielsweise mit ein oder mehreren Bohrungen gleicher oder unterschiedlicher Durchmesser statt oder in Ergänzung zu einer Zentralöffnung 19 vorgesehen sein. Die zweite Spritzgießformhälfte 8 weist eine Werkzeugeingangswelle 20 auf. Die Werkzeugeingangswelle 20 kann insbesondere dazu eingerichtet sein, einen oder mehrere bewegliche (nicht dargestellte) Schieber und/oder Gießkerne, insbesondere Gewindekerne des Spritzgießwerkzeugs, d.h. der Spritzgießformhälfte 7 und/oder 8 anzutreiben. Ein Kupplungsmittel 21, das eine Welle-Welle-Verbindung darstellen kann und insbesondere als Kupplungsbuchs ausgebildet sein kann, verbindet die Adapterwelle 18 mit der Werkzeugeingangswelle 20 drehfest. Das Kupplungsmittel 21 kann die Adapterwelle 18 mit der Werkzeugeingangswelle 20 axial verschieblich verbinden.

Ein Ausführungsbeispiel einer erfindungsgemäßen Adaptervorrichtung 22 weist eine Adapterbuchse 23 und eine Adapterplatte 24 auf. Die Adapterbuchse 23 der Adaptervorrichtung 22 ist in einer Aufnahme 26 der Auswerferplatte 13 axial verschieblich geführt. Die Aufnahme 26 kann von einem Durchlass in der Auswerferplatte 13 gebildet werden. Die Adapterbuchse 23 ist hohlzylindrisch ausgebildet, so dass die Adapterwelle 18 durch die Adapterbuchse 23 in axialer Richtung hindurchgeführt gelagert ist. Die Adapterwelle 18 ist dabei frei drehbar durch die Adapterbuchse 23 hindurchgeführt.

An einer der Adapterbuchse 23 gegenüberliegenden Seite der Adapterplatte 24 ist wenigstens eine, im Ausführungsbeispiel vier Auswerferstangen 25 mit der Adapterplatte 24 verbunden, insbesondere an der Adapterplatte 24 befestigt. Die Auswerferstangen 25 können beispielsweise eine kreiszylindrische Außenkontur aufweisen. Die Auswerferstangen 25 können, statt hohl zu sein, beispielsweise zur Bildung von Auswerferstiften aus Vollmaterial hergestellt sein. Wie die Adapterwelle 18 sind die Auswerferstangen 25 durch die Zentralöffnung 19 der beweglichen Formaufspannplatte 4 hindurch an die Spritzgießformhälfte 8 herangeführt, bzw. in die Spritzgießformhälfte 8 hineingeführt. Über die Adaptervorrichtung 22 sind die Auswerferstangen 25 mit der Auswerferplatte 13 gekoppelt.

Indem die Adapterbuchse 23 der Adaptervorrichtung 22 axial verschieblich in der Aufnahme 26 bzw. dem Durchlass der Auswerferplatte 13 geführt ist, ergibt sich ein Freiziehweg, d.h. ein Leerhubweg zwischen der Adapterplatte 24 und einem erfindungsgemäßen Anschlagkörper 27. Die Größe bzw. die axiale Länge des Freiziehweges, d.h. des Leerhubweges ergibt sich aus dem Abstand der Adapterplatte 24 von dem Anschlagkörper 27 auf der Adapterbuchse 23. Die erfindungsgemäße Freizieh-Einrichtung 30 wird insoweit im Wesentlichen durch die in der Aufnahme 26 bzw. dem Durchlass der Auswerferplatte 13 geführte Adapterbuchse 23, durch die Adapterplatte 24 und den Anschlagkörper 27 gebildet.

Zur Bildung eines einstellbaren Freiziehbereiches, d.h. zur Veränderung des Freiziehweges, d.h. des Leerhubweges ist erfindungsgemäß der Anschlagkörper 27 axial verstellbar auf der Adapterbuchse 23 gelagert und/oder befestigt. Der Anschlagkörper 27 ist insbesondere auf der Adapterbuchse 23 manuell einstellbar, d.h. der Anschlagkörper 27 kann auf der Adapterbuchse 23 manuell in seiner axialen Position auf der Adapterbuchse 23 verstellt und in einer gewünschten axialen Position auf der Adapterbuchse 23 arretiert werden.

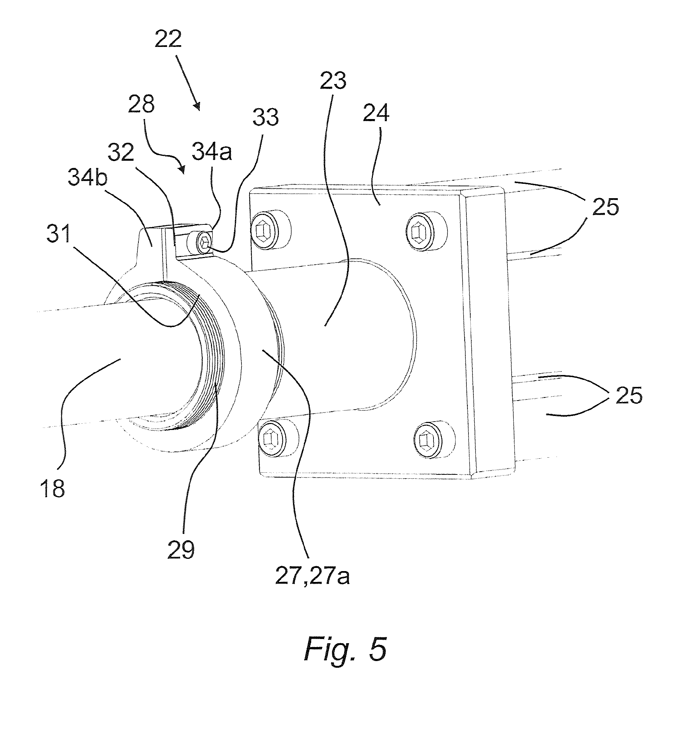

In der Fig. 5 ist die Adaptervorrichtung 22 in Alleinstellung gezeigt. Die Adapterplatte 24 weist eine vordere Stirnseite auf, an der die wenigstens eine Auswerferstange 25 befestigt ist. Außerdem weist die Adapterplatte 24 eine der vorderen Stirnseite gegenüberliegende rückseitige Stirnseite auf, an der die Adapterbuchse 23 angeordnet ist.

Der Anschlagkörper 27 ist auf der Adapterbuchse 23 verstellbar und arretierbar gelagert, um den Freiziehbereich festlegen zu können. Der Anschlagkörper 27 wird im dargestellten Ausführungsbeispiel durch einen auf der Adapterbuchse 23 axial verschieblich gelagerten Klemmring 27a gebildet wird, der ein Spannmittel 28 aufweist, durch das der Klemmring 27a auf der Adapterbuchse 23 kraftschlüssig zumindest axial, insbesondere axial und radial arretiert ist. Die Adapterbuchse 23 kann ein Außengewinde 29 aufweisen, auf dem der Klemmring 27a mit seinem Innengewinde 31 aufsitzt. Der Klemmring 27a kann einen radialen Schlitz 32 aufweisen. Der Schlitz 32 kann durch eine Stellschraube 33 in seiner Schlitzweite verstellt werden. Insbesondere kann die Stellschraube 33 zwei Laschen 34a, 34b des Klemmrings 27a zusammenführen, so dass die Schlitzweite verkleinert wird und dadurch der Klemmring 27a auf der Adapterbuchse 23 festgeklemmt werden kann. Zum Lösen des Klemmrings 27a können die zwei Laschen 34a, 34b des Klemmrings 27a durch die Stellschraube 33 auseinander bewegt werden, so dass die Schlitzweite vergrößert wird und dadurch der Klemmring 27a auf der Adapterbuchse 23 beweglich wird. Die Adapterbuchse 23 kann aufgrund des Außengewindes 29 der Adapterbuchse 23 und dem korrespondierendem Innengewinde 31 des Klemmrings 27a durch Drehen des Klemmrings 27a in seiner axialen Position auf der Adapterbuchse 23 verstellt werden. Alternativ kann die Mantelwand der Adapterbuchse 23 und die Innenwand des Klemmrings 27a jeweils glatt ausgebildet werden, so dass der Klemmring 27a in seinem ungeklemmten Zustand auf der Adapterbuchse 23 gleitend axial verschoben werden kann.

### Bezugszeichenliste

- 1: Spritzgießmaschine
- 2: Maschinenbett
- 3: feststehende Formaufspannplatte
- 4: bewegliche Formaufspannplatte
- 5: Horizontalsäulen
- 6: Linearführungen
- 7: erste Spritzgießformhälfte
- 8: zweite Spritzgießformhälfte
- 9: Grundträger
- 10: Spritzgußteil-Auswerfvorrichtung
- 11: Befestigungsmittel
- 12: Axialführungen
- 13: Auswerferplatte
- 14: Gleitbuchsen
- 15: Stelltriebe
- 15a, 15b: Hydraulikzylinder
- 16: Motor
- 17: Motorwelle
- 18: Adapterwelle
- 19: Zentralöffnung
- 20: Werkzeugeingangswelle
- 21: Kupplungsmittel
- 22: Adaptervorrichtung
- 23: Adapterbuchse
- 24: Adapterplatte
- 25: Auswerferstangen
- 26: Aufnahme
- 27: Anschlagkörper
- 27a: Klemmring
- 28: Spannmittel
- 29: Außengewinde
- 30: Freizieh-Einrichtung
- 31: Innengewinde
- 32: Schlitz
- 33: Stellschraube
- 34a, 34b: Laschen

## Patentansprüche

1. Spritzgußteil-Auswerfvorrichtung, aufweisend einen Grundträger (9), ein mit dem Grundträger (9) verbundenes Befestigungsmittel (11), das zur festen Verbindung des Grundträgers (9) mit einer Formaufspannplatte (3, 4) einer Spritzgießmaschine (1) ausgebildet ist, wenigstens eine mit dem Grundträger (9) verbundene Axialführung (12), eine an der wenigstens einen Axialführung (12) verschieblich gelagerte Auswerferplatte (13), einen die Auswerferplatte (13) antreibenden Stelltrieb (15, 15a, 15b), sowie wenigstens eine an die Auswerferplatte (13) gekoppelte Auswerferstange (25), des Weiteren aufweisend eine die Auswerferplatte (13) an die Auswerferstange (25) koppelnde Adaptervorrichtung (22), die eine Freizieh-Einrichtung (30) aufweist, die ausgebildet ist, eine Bewegung der Auswerferplatte (13) auf die wenigstens eine Auswerferstange (25) unter Bildung eines einstellbaren Freiziehbereiches zu übertragen, **dadurch gekennzeichnet, dass** die Adaptervorrichtung (22) eine Adapterplatte (24) aufweist, die eine vordere Stirnseite aufweist, an der die wenigstens eine Auswerferstange (25) befestigt ist, und eine der vorderen Stirnseite gegenüberliegende rückseitige Stirnseite aufweist, an der eine Adapterbuchse (23) angeordnet ist, die zur Bildung der Freizieh-Einrichtung (30) in einer Aufnahme (26) der Auswerferplatte (13) axial verschieblich geführt ist und die an einer der Adapterplatte (24) gegenüberliegenden Seite der Auswerferplatte (13) einen auf der Adapterbuchse (23) verstellbar und arretierbar gelagerten, den Freiziehbereich festlegenden Anschlagkörper (27) aufweist.

2. Spritzgußteil-Auswerfvorrichtung nach Anspruch 1,
**dadurch gekennzeichnet, dass** die Freizieh-Einrichtung (30) ausgebildet ist, eine Bewegung der Auswerferplatte (13) auf die Auswerferstange (25) und/oder die Adapterplatte (24) unter Bildung eines manuell einstellbaren Freiziehbereiches zu übertragen.

3. Spritzgußteil-Auswerfvorrichtung nach Anspruch 2,
**dadurch gekennzeichnet, dass** der Anschlagkörper (27) durch einen auf der Adapterbuchse (23) axial verschieblich gelagerten Klemmring (27a) gebildet wird, der ein Spannmittel (28) aufweist, durch das der Klemmring (27a) auf der Adapterbuchse (23) kraftschlüssig zumindest axial arretierbar ist.

4. Spritzgußteil-Auswerfvorrichtung nach einem der Ansprüche 1 bis 3,
**dadurch gekennzeichnet, dass** an dem Grundträger (9) ein Motor (16) angeordnet ist, der eine Motorwelle (17) aufweist, die mit einer Adapterwelle (18) verbunden ist, die ein Kupplungsmittel (21) zum Verbinden der Adapterwelle (18) mit einer Werkzeugeingangswelle (20) eines bewegliche Schieber und/oder Gießkerne, insbesondere Gewindekerne aufweisenden Spritzgießwerkzeugs (7, 8) aufweist.

5. Spritzgußteil-Auswerfvorrichtung nach Anspruch 4,
**dadurch gekennzeichnet, dass** die Auswerferplatte (13) eine Aufnahme (26) aufweist, durch die sich die Adapterwelle (18) erstreckt, wobei die Adapterbuchse (23) axial verschieblich in der Aufnahme (26) geführt ist und die Adapterwelle (18) durch die Adapterbuchse (23) drehbar hindurchgeführt ist.

6. Spritzgußteil-Auswerfvorrichtung nach einem der Ansprüche 1 bis 5,
**dadurch gekennzeichnet, dass** der die Auswerferplatte (13) antreibende Stelltrieb (15), insbesondere ein hydraulisch oder pneumatisch betätigter Stelltrieb (15a, 15b) an dem Grundträger (9) angeordnet, insbesondere an dem Grundträger (9) befestigt ist.

7. Kunststoff-Spritzgießmaschine aufweisend eine Spritzgußteil-Auswerfvorrichtung (10) nach einem der Ansprüche 1 bis 6.

8. Kunststoff-Spritzgießmaschine nach Anspruch 7,
**gekennzeichnet durch** eine Steuervorrichtung, die eingerichtet ist, den Stellantrieb (15, 15a, 15b) und den Motor (16) aufeinander abgestimmt, insbesondere synchronisiert anzutreiben.

9. Kunststoff-Spritzgießmaschine nach Anspruch 7 oder 8,
**dadurch gekennzeichnet, dass** die Kunststoff-Spritzgießmaschine (1) eine Formaufspannplatte (3, 4) mit einer Zentralöffnung (19) aufweist, durch welche die wenigstens eine Auswerferstange (25) und die Adapterwelle (18) hindurch an eine an der Formaufspannplatte (3, 4) befestigte Spitzgießformhälfte (7, 8) herangeführt sind.

## Claims

1. An injection moulded part ejecting device, having a base carrier (9), a fastening means (11) connected with the base carrier (9), which is constructed for the fixed connection of the base carrier (9) with a platen (3, 4) of an injection moulding machine (1), at least one axial guide (12) connected with the base carrier (9), an ejector plate (13) mounted displaceably on the at least one axial guide (12), an actuator (15, 15a, 15b) driving an ejector plate (13), and at least one ejector rod (25) coupled to the ejector plate (13), having furthermore an adapter device (22) coupling the ejector plate (13) to the ejector rod (25), which adapter device has a free-drawing arrangement (30), which is constructed to transfer a movement of the ejector plate (13) to the at least one ejector rod (25) with the formation of an adjustable free-drawing region, **characterized in that** the adapter device (22) has an adapter plate (24), which has a front face side on which the at least one ejector rod (25) is fastened, and a rear face side, lying opposite the front face side, on which an adapter bush (23) is arranged, which is guided in an axially displaceable manner for the formation of the free-drawing arrangement (30) in a mount (26) of the ejector plate (13) and which has on a side of the ejector plate (13) lying opposite the adapter plate (24) a stop body (27), mounted adjustably and arrestably on the adapter bush (23), establishing the free-drawing region.

2. The injection moulded part ejecting device according to Claim 1,
**characterized in that** the free-drawing arrangement (30) is constructed to transfer a movement of the ejector plate (13) to the ejector rod (25) and/or the adapter plate (24) with the formation of a manually adjustable free-drawing region.

3. The injection moulded part ejecting device according to Claim 2,
**characterized in that** the stop body (27) is formed by a clamping ring (27a) mounted axially displaceably on the adapter bush (23), which clamping ring has a clamping means (28) by which the clamping ring (27a) is able to be arrested at least axially in a force-fitting manner on the adapter bush (23).

4. The injection moulded part ejecting device according to one of Claims 1 to 3,
**characterized in that** a motor (16) is arranged on the base carrier (9), which motor has a motor shaft (17) which is connected with an adapter shaft (18), which has a coupling means (21) for connecting the adapter shaft (18) with a tool input shaft (20) of an injection mould (7, 8) having movable sliders and/or casting cores, in particular threaded cores.

5. The injection moulded part ejecting device according to Claim 4,
**characterized in that** the ejector plate (13) has a mount (26) through which the adapter shaft (18) extends, wherein the adapter bush (23) is guided axially displaceably in the mount (26) and the adapter shaft (18) is guided rotatably through the adapter bush (23).

6. The injection moulded part ejecting device according to one of Claims 1 to 5,
**characterized in that** the actuator (15) driving the ejector plate (13), in particular a hydraulically or pneumatically actuated actuator (15a, 15b) is arranged on the base carrier (9), in particular is fastened on the base carrier (9).

7. A plastic injection moulding machine having an injection moulded part ejecting device (10) according to one of Claims 1 to 6.

8. The plastic injection moulding machine according to Claim 7,
**characterized by** a control device, which is arranged to drive the actuator (15, 15a, 15b) and the motor (16) in a manner coordinated with one another, in particular in a synchronized manner.

9. The plastic injection moulding machine according to Claim 7 or 8,
**characterized in that** the plastic injection moulding machine (1) has a platen (3, 4) with a central opening (19), through which the at least one ejector rod (25) and the adapter shaft (18) are guided up to an injection mould half (7, 8) fastened to the platen (3, 4).

## Revendications

1. Dispositif d'éjection d'une pièce moulée par injection comprenant un support de base (9), un moyen de fixation (11) relié au support de base (9) qui est conçu pour relier fixement le support de base (9) à une plaque de serrage de moule (3, 4) d'une machine de moulage injection (1), au moins un guide axial (12) relié au support de base (9), une plaque d'éjecteur (13) disposée en étant mobile sur l'au moins un guide axial (12), au moins un pignon de réglage (15, 15a, 15b) entraînant la plaque d'éjecteur (13), ainsi qu'au moins une barre d'éjecteur (25) couplée à la plaque d'éjecteur (13), présentant en outre un dispositif adaptateur (22) couplant la plaque d'éjecteur (13) à la barre d'éjecteur (25), qui présente un dispositif de traction libre (30), qui est conçu pour transmettre un mouvement de la plaque d'éjecteur (13) à l'au moins une barre d'éjecteur (25) en formant une zone de traction libre réglable, **caractérisé en ce que** le dispositif adaptateur (22) présente une plaque adaptatrice (24) qui présente une face frontale avant sur laquelle l'au moins une barre d'éjecteur (25) est fixée, et présente une face avant côté arrière opposée à la face frontale avant sur laquelle est disposé un manchon adaptateur (23), qui est dirigé mobile axialement pour former le dispositif de traction libre (30) dans une réception (26) de la plaque d'éjecteur (13) et qui présente sur une face de la plaque d'éjecteur (13) opposée à la plaque adaptatrice (24), un corps de butée (27) disposé en pouvant être déplacé et en pouvant être bloqué sur le manchon adaptateur (23), définissant la zone de traction libre.

2. Dispositif d'éjection d'une pièce moulée par injection selon la revendication 1,
**caractérisé en ce que** le dispositif de traction libre (30) est conçu pour transmettre un mouvement de la plaque d'éjecteur (13) à la barre d'éjecteur (25) et/ou la plaque adaptatrice (24) en formant une zone de traction libre réglable manuellement.

3. Dispositif d'éjection d'une pièce moulée par injection selon la revendication 2,
**caractérisé en ce que** le corps de butée (27) est formé par une bague de serrage (27a) disposée mobile axialement sur le manchon adaptateur (23), qui présente un moyen de serrage (28) par lequel la bague de serrage (27a) peut être bloquée au moins axialement par adhérence de forces sur le manchon adaptateur (23).

4. Dispositif d'éjection d'une pièce moulée par injection selon l'une des revendications 1 à 3,
**caractérisé en ce qu'**un moteur (16) est disposé sur le support de base (9), lequel présente un arbre de moteur (17) qui est relié à un arbre adaptateur (18) qui présente un moyen de couplage (21) pour relier l'arbre adaptateur (18) à un arbre d'entrée d'outil (20) d'un outil de moulage par injection (7, 8) présentant des poussoirs et/ou des noyaux de moulage mobiles, en particulier des fonds de filet.

5. Dispositif d'éjection d'une pièce moulée par injection selon la revendication 4,
**caractérisé en ce que** la plaque d'éjecteur (13) présente une réception (26) à travers laquelle l'arbre adaptateur (18) s'étend, sachant que le manchon adaptateur (23) est dirigé en étant mobile axialement dans la réception (26) et l'arbre adaptateur (18) est dirigé en rotation à travers le manchon adaptateur (23).

6. Dispositif d'éjection d'une pièce moulée par injection selon l'une des revendications 1 à 5,
**caractérisé en ce que** le pignon de réglage (15) entraînant la plaque d'éjecteur (13), en particulier un pignon de réglage (15a, 15b) à actionnement hydraulique ou pneumatique, est disposé sur le support de base (9), en particulier, est fixé sur le support de base (9).

7. Machine de moulage par injection de plastique, présentant un dispositif d'éjection de pièce moulée par injection (10) selon l'une des revendications 1 à 6.

8. Machine de moulage par injection de plastique selon la revendication 7,
**caractérisée par** un dispositif de commande qui est équipé pour entrainer le pignon de réglage (15, 15a, 15b) et le moteur (16) de façon coordonnée entre eux, en particulier de façon synchronisée.

9. Machine de moulage par injection de plastique selon la revendication 7 ou 8,
**caractérisée en ce que** la machine de moulage par injection de plastique (1) présente une plaque de serrage de moule (3, 4) avec une ouverture centrale (19) à travers laquelle l'au moins une barre d'éjecteur (25) et l'arbre adaptateur (18) sont approchés sur une moitié de moule de moulage par injection (7, 8) fixée sur la plaque de serrage de moule (3, 4).
